## Europäisches Patentamt
## European Patent Office
## Office européen des brevets

(19)

(11) Veröffentlichungsnummer: **0 069 840**
**A1**

(12) # EUROPÄISCHE PATENTANMELDUNG

(21) Anmeldenummer: **82103927.8**

(22) Anmeldetag: **06.05.82**

(51) Int. Cl.³: **H 04 N 9/29**

(30) Priorität: **10.07.81 DE 3127299**

(43) Veröffentlichungstag der Anmeldung:
**19.01.83 Patentblatt 83/3**

(84) Benannte Vertragsstaaten:
**AT CH FR GB IT LI SE**

(71) Anmelder: **Blaupunkt-Werke GmbH**
**Robert-Bosch-Strasse 200**
**D-3200 Hildesheim(DE)**

(72) Erfinder: **Diethelm, Otto, Ing. grad.**
**Brinkstrasse 18**
**D-3207 Harsum 3(DE)**

(72) Erfinder: **Meyer, Bernd, Ing. grad.**
**Lüneburger Strasse 8**
**D-3200 Hildesheim(DE)**

(74) Vertreter: **Eilers, Norbert, Dipl.-Phys.**
**Blaupunkt-Werke GmbH Robert-Bosch-Strasse 200**
**D-3200 Hildesheim(DE)**

(54) Farbfernsehmonitor.

(57) Es wird ein Farbfernsehmonitor beschrieben, der zum Betrieb in Fahrzeugen dadurch verbessert wird, daß die Entmagnetisierungseinrichtung in kurzen Zeitabständen automatisch kurzzeitig eingeschaltet wird.

Fig. 1

EP 0 069 840 A1

Farbfernsehmonitor

Die Erfindung betrifft einen Farbfernsehmonitor für Fahrzeugbetrieb mit
einer schaltbaren Entmagnetisierungseinrichtung für die Farbbildröhre.

Stand der Technik

In den bekannten Farbfernsehgeräten wird mit dem Einschalten des Gerätes
auch eine Entmagnetisierungsschaltung eingeschaltet, die einen abklingenden Wechselstrom durch die Entmagnetisierungsspulen an der Farbbildröhre
schickt. Die Notwendigkeit einer Entmagnetisierung von Farbbildröhren
zur Vermeidung von sichtbaren Störungen in der Farbreinheit nach gewissen
Standortwechseln des Farbfernsehgerätes ist dem Fachmann geläufig.

In der Praxis hat man daraus die Konsequenz gezogen, die Bildröhre von
Farbfernsehempfängern oder -monitoren beim Einschalten des Gerätes automatisch zu entmagnetisieren. Dieser Entmagnetisierungsvorgang fällt in die
Anheizzeit der Bildröhre und ist daher für den Betrachter nicht sichtbar.
Die Dauer des Entmagnetisierungsvorganges ist aus diesem Grund unkritisch.

Aufgabenstellung und -erfindung

Bei dem Aufbau einer Anlage zur Wiedergabe von Farbbildaufzeichnungen über
einen Farbmonitor in Autobussen zeigte sich, daß die durch die Straßenführungen bedingten häufigen Fahrtrichtungsänderungen sich störend in der
Farbreinheit des wiedergegebenen Bildes bemerkbar machen. Besonders auffällig wirken sich darüber hinaus die Unterfahrungen von Oberleitungen von
Straßenbahnen und Eisenbahnen aus, die bei jeder Fahrtroutenführung von
Reisebussen unvermeidbar sind. Diese Oberleitungen sind von Magnetfeldern
umgeben, die sich dem Magnetfeld in der Bildröhre überlagern und damit
die Ablenkung der Elektronenstrahlen nachteilig beeinflussen.

Zur Beseitigung dieser Störung schlagen die Erfinder vor, Farbfernsehgeräte oder -monitore gemäß dem Oberbegriff des Hauptanspruchs entsprechend den Merkmalen der Kennzeichen des Hauptanspruchs auszugestalten
und ggf. hierbei auch die Merkmale der Kennzeichen der Unteransprüche
zu verwenden.

Durch die erfindungsgemäße Maßnahme ist sichergestellt, daß die Farbreinheit der Bildwiedergabe erhalten bleibt und Maßnahmen hierfür sich
kaum störend bemerkbar machen.

Beschreibung

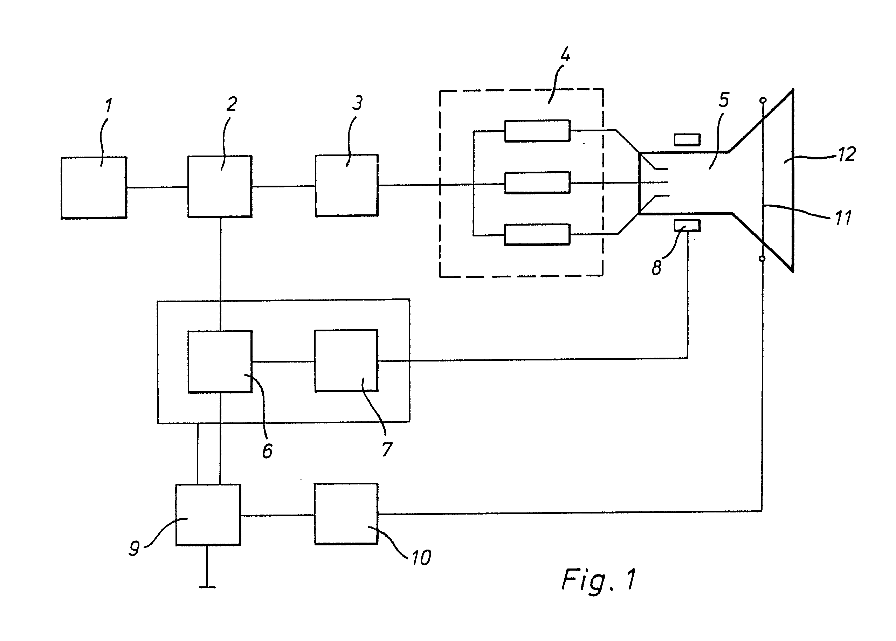

Anhand der Zeichnung wird die Erfindung näher erläutert. Dabei zeigen
Figur 1 das Blockschaltbild eines bekannten Farbfernsehmonitors,
Figur 2 eine Schaltung zur erfindungsgemäßen Verbesserung des Farbfernsehmonitors nach Figur 1.

In den bekannten Farbfernsehmonitoren wird das z. B. vom Bildbandgerät abgenommene Eingangssignal der Eingangsstufe 1 zugeführt. Das Eingangssignal für diese Eingangsstufe kann auch von dem Ausgangssignal
eines vorgeschalteten Empfängerteils gebildet sein. Auf die Darstellung
des Aufbaus kann hier, wie auch für die übrigen Stufen 2 bis 11 verzichtet werden, da ihre Ausgestaltung für die Erfindung von untergeordneter Bedeutung ist.

Das Signal wird von der Eingangsstufe 1 über ein Amplitudensieb 2 geleitet, in dem die Synchronsignale vom Bildinhalt getrennt werden.
Auf das Amplitudensieb 2 folgt zum einen der Bildverstärker 3, dessen
Ausgangssignal über die RBG Ansteuerung 4 der Bildröhre 5 zugeführt
wird. Andererseits ist an das Amplitudensieb 2 die Ablenkschaltung 6
angeschlossen, die u. a. die Vertikalstufe 7 umfaßt. Die Ablenkereinheit 8 auf dem Hals des Bildrohrs 5 ist u. a. mit dieser Vertikalstufe 7 verbunden. Das Netzteil 9 liefert die verschiedenen Betriebsspannungen für den Farbfernsehmonitor.

0069840

6.7.1981
R.Nr. 1714

Eine Entmagnetisierungsschaltung 10 ist mit der Entmagnetisierungsstufe 11 auf dem Kolben 12 der Bildröhre 5 verbunden. Nach dem Stand der Technik wird beim Einschalten des Farbfernsehmonitors ein abklingender Stromstoß durch die Entmagnetisierungsspule geschickt, der im wesentlichen nach 2,5 ms abgeklungen ist.

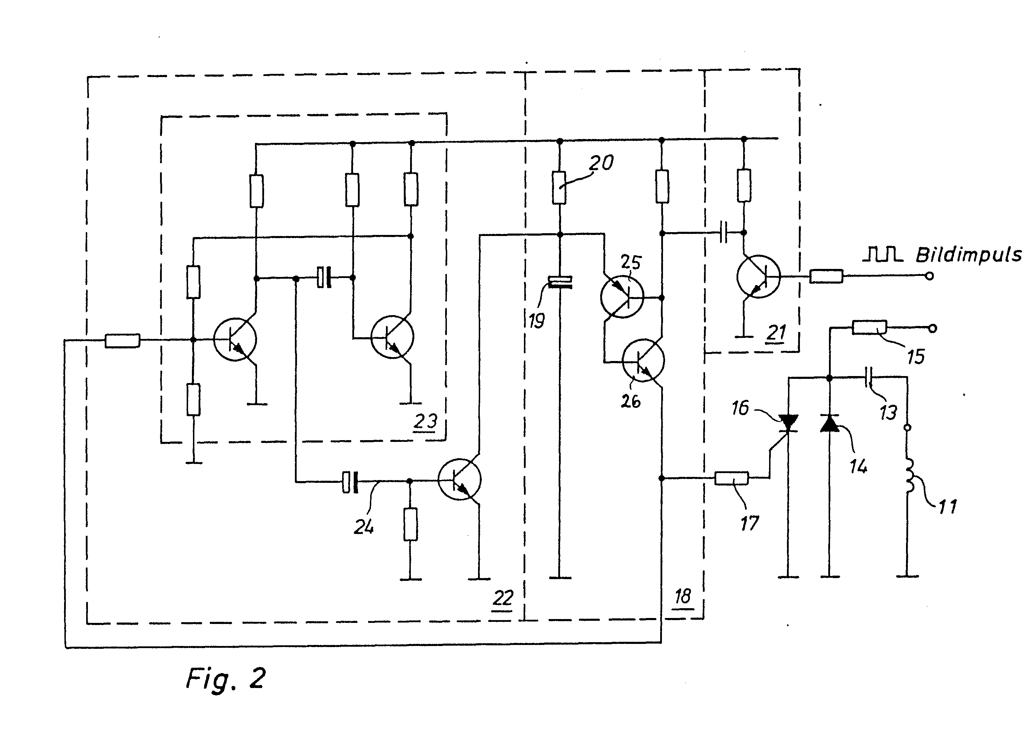

Eine erfindungsgemäß aufgebaute Entmagnetisierungsschaltung ist in Figur 2 dargestellt. Die Entmagnetisierungsspule 11 bildet zusammen mit dem Kondensator 13 einen Parallelschwingkreis, zu dem eine Diode 14 parallel geschaltet ist. Über einen Ladewiderstand 15 liegt dieser Schwingkreis an einer Spannung von ungefähr 800 Volt, z. B. der Schirmgitterspannung. Antiparallel zur Diode 14 liegt ein Thyristor 16, der von der über den Widerstand 17 angeschlossenen Schaltung gezündet wird. Wenn der Thyristor gezündet ist, so wird der Kondensator 13 entladen, der zuvor auf 800 Volt aufgeladen war. Dadurch wird der durch den Serienwiderstand der Entmagnetisierungsspule 11 gedämpfte Parallelschwingkreis zu einer stark gedämpften Schwingung angeregt. Für die Entmagnetisierung ist eine gedämpfte Schwingung wesentlich. Die Dauer des Entmagnetisierungsvorganges wird durch die Induktivität der Entmagnetisierungspule 11 deren Serienwiderstand und die Größe des Kondensators 13 bestimmt. Die Größe des Widerstandes 15 und die Größe des Kondensators 13 zusammen, bestimmen hingegen die Zeit, die für eine Wiederaufladung des Kondensators nach Abklingen der gedämpften Schwingung erforderlich ist.

Die Zündung des Thyristors 16 wird durch einen Zündimpuls aus dem Zündgenerator 18 bewirkt. Der Zündgenerator 18 enthält einen Kondensator 19, der die erforderliche Zündenergie liefert. Die Entladung dieses Kondensators - der beim Einschalten des Gerätes zunächst über den Widerstand 20 aufgeladen wird - wird über eine Impulsformerstufe 21 durch einen Bildsynchronimpuls eingeleitet, der als solche in einem zeitlichen Abstand von 20 ms aufeinanderfolgen. Diese Bildsynchronimpulse werden entweder aus dem Amplitudensieb 2 direkt entnommen oder aus dem Sägezahn der Vertikalablenkstufe 7 erzeugt.

**0069840**
6.7.1981
K.Nr. 1714

Die Zündimpulse werden neben dem Thyristor 16 auch einem Repetietorkreis 22 zugeführt, der im wesentlichen aus einem Mono-Flopp 23 und einem dessen Ausgang nachgeschaltetem Impulsformer 24 besteht. Der Kollektor des Transistors in der Impulsformerstufe 24 ist mit dem Hochpunkt des Kondensators 19 verbunden. Während der Standzeit des Mono-Flopps ist der Transistor im Implusformer 24 gesperrt, so daß der Kondensator 19 erst nach Ablauf der Standzeit des Mono-Flopps, wenn der Impulsformer 24 leitend war, aufgeladen werden kann.

Sobald die Spannung am Kondensator 19 einen vorgegebenen Schwellwert überschritten hat, kann der nächste Bildsynchronimpuls die Entladung des Kondensators 19 einleiten und damit wieder einen Zündimpuls für den Transistor auslösen. Die erforderliche Höhe der Kondensatorladung wird über die Transistoren 25, 26 und die Größe des Synchronimpulses selbst bestimmt.

Die Schaltung ist so dimensioniert, daß zum einen Entmagnetisierung im wesentlichen innerhalb der Bildaustastlücke erfolgt, so daß auch bei häufigen Wiederholungen der Entmagnetisierung während einer laufenden Wiedergabe keine Störungen im wiedergegebenen Bild auftreten und zum anderen ist der Mono-Flopp 23 so ausgelegt, daß die Entmagnetisierungen sich im zeitlichen Abstand von einigen wenigen Minuten wiederholen.

Damit ist gewährleistet, daß eine durch ein äußeres Magnetfeld hervorgerufene Störung der Farbreinheit der Bildwiedergabe alsbald wieder beseitigt ist.

Der Erfindungsgedanke läßt natürlich eine Vielzahl von Ausführungsbeispielen zu. Das vorstehend beschriebene Ausführungsbeispiel ist in einem Gerät erprobt worden und ist zur Serienfertigung vorgesehen.

0069840
6.7.1981
R.Nr. 1714

Patentansprüche

1.  Farbfernsehmonitor für Fahrzeugbetrieb mit einer schaltbaren Entmagnetisierungseinrichtung für die Farbbildröhre,
    dadurch gekennzeichnet,
    daß die Entmagnetisierungseinrichtung bei laufendem Wiedergabebetrieb in kurzen zeitlichen Abständen jeweils während der Bildaustastlücke automatisch eingeschaltet wird.

2.  Farbfernsehmonitor nach Anspruch 1,
    dadurch gekennzeichnet,
    daß die Entmagnetisierungseinrichtung in regelmäßigen Abständen
    durch Bildsynchronimpulse zu gedämpften Schwingungen angestoßen
    wird, und der Entmagnetisierungskreis derart dimensioniert ist, daß
    die gedämpften Schwingungen am Ende einer Bildaustastlücke im
    wesentlichen abgeklungen sind.

3.  Farbfernsehmonitor nach Anspruch 1 oder 2, gekennzeichnet durch
    einen Kondensator (13) der an die Schaltelektrode eines Schaltthyristors (16) im Entmagnetisierungskreis angeschlossen ist, durch
    eine Impulsformerstufe (21), deren von Bildrücklaufimpulsen abgeleitete Synchronimpulse den Kondensator (19) entladen und durch einen
    Mono-Flopp (23), der durch die Synchronimpulse gesetzt wird und
    während seiner Standzeit die Aufladung des Kondensators (19) unter-
    bindet.

Fig. 1

0069840

Bildimpuls

Fig. 2

# EUROPÄISCHER RECHERCHENBERICHT

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 439 211 (CASSAGNE et al.) * Zusammenfassung; Spalte 4, Zeilen 9-47, Spalte 4, Zeile 63 bis Spalte 5, Zeile 3; Figuren 3,5 * | 1-3 | H 04 N 9/29 |
| | --- | | |
| X | FR-A-1 554 575 (COMPAGNIE FRANCAISE DE TELEVISION) * Seite 2, linke Spalte, Zeilen 1-6, Seite 2, rechte Spalte, Zeilen 40-58; Figur 2 * | 1,2 | |

**RECHERCHIERTE SACHGEBIETE (Int. Cl. ³)**

H 04 N 9/29
H 01 J 29/00

Der vorliegende Recherchenbericht wurde für alle Patentansprüche erstellt.

| Recherchenort | Abschlußdatum der Recherche | Prüfer |
|---|---|---|
| DEN HAAG | 10-08-1982 | ZANELLA C.A. |